# EUROPEAN PATENT SPECIFICATION

(11) **EP 2 192 358 B1**
(45) Date of publication and mention of the grant of the patent: **31.08.2016**
(21) Application number: 09252644.1
(22) Date of filing: 18.11.2009
(51) Int. Cl.: F24H 8/00, C02F 1/66

(54) **Condensate unit**
Kondensateinheit
Unité à condensats

(30) Priority: 01.12.2008 GB 0821908
(43) Date of publication of application: 02.06.2010
(73) Proprietor: Sentinel Performance Solutions Ltd, Daresbury Warrington Cheshire WA4 4BS (GB)
(72) Inventor: Day, Paul, Dr., 2000 Antwerpen (BE)
(74) Representative: Fenwick, Elizabeth Anne

(56) References cited:
- DE-A1- 3 243 988
- JP-A- S6 097 094
- JP-A- 2001 300 554

## Description

The invention relates to the treatment of acidic aqueous solution, particularly the condensate that is generated as a by-product of a central heating boiler of the condensation type i.e. a so-called 'condensing boiler'.

The invention is a unit which fits onto a condensate discharge line of a domestic or small commercial high efficiency condensing boiler. It is characteristic of such boilers that in operation they extract waste heat from the spent gas exhaust flue and in so doing the exhaust is cooled below the dew point of water so that vapour in the exhaust gases condenses to form an acidic aqueous condensate. This is either discharged directly or collected in the boiler casing in a siphon trap (which also acts as a seal between the exhaust gas area and the consumer's house environment) and from which it is periodically discharged by a siphoning action into a pipe which flows to drain. It is generally recognised as undesirable for acid liquid like this to be allowed to flow to drain because of its impact on the environment. This can be alleviated by having a simple flow-through unit in the discharge line which contains an alkaline neutralising medium such as calcium or magnesium carbonates/oxides or mixtures thereof which chemically neutralise the acid. The problem with these simple devices is that they tend to interfere with the siphoning action of the condensate discharge by retarding and restricting both air and condensate flow. They also are prone to blocking (due to physical degradation of the neutralising media) and when blocked, back up condensate flow and flood the boiler with condensate and cause problems of boiler cut-out, corrosion, spillage of acid etc. JP 2001 300554A (Noritz Corp) describes a neutralising device (1) according to the preamble of claim 1.

According to the present invention a neutralising unit suitable for attachment to the condensate outlet of a condensing boiler comprises the features as defined in claim 1.

The unit is provided with an air passage to allow substantially continuous air flow through the unit without the air having to pass through the entire length of the first and second chambers and without passing through the neutralising agent. The aim of this feature is to allow air to flow upstream (i.e. towards the boiler) so as not to interfere with the siphoning action of the condensate discharge. The feature also serves as the escape passage for condensate in the event of blockage as described below.

The first chamber is provided with a barrier means, such as a baffle, to direct condensate into the first chamber, in the absence of which the condensate could pass direct into the second chamber. In the event of blockage of the unit caused by any restriction to flow in either first or second chamber, the geometry of the unit is so designed that condensate backs up in the first chamber. It would encounter an escape passage at or near the top of the separating wall between first and second chambers and can enter and then discharge as normal from the top of the second chamber- but without having passed through the neutralising agent. Although discharge from the unit would then be un-neutralised acidic condensate, there would be no danger of interfering with the operation of the boiler, nor of condensate backing up to the boiler unit itself.

The solid neutralising agent is in particulate form, e.g. chippings or granular such as spheres, having a maximum dimension in the size range 0.1 to 10mm. The aim would be to use as the neutralising agent a material or mixture of materials which does not dissolve too quickly, is readily and cheaply available and which does not produce (in combination with the condensate) compounds which would be detrimental to the environment or to the surrounding medium e.g. the unit itself or associated pipe work. Examples of suitable neutralising agents may include, but are not limited to one or more carbonates, oxides or hydroxide of one or more metallic elements. Preferably the neutralising agent comprises calcium or magnesium carbonates/oxides or mixtures thereof. The solid neutralising agent (the 'medium') is in particulate form and is enclosed in a sealed permeable container. In a particularly preferred embodiment the solid neutralising agent is enclosed in a pliable container such as a mesh bag or 'sock' which can easily be pushed into, and extracted from the second chamber. Upon exhaustion, the bag is easily removed from a screw cap access at the top of the second chamber and easily replaced with a new bag of medium. This means that the whole unit need not be replaced upon chemical exhaustion of the medium, which would be necessary in simple units. This also means that the unit need not be removed, nor the discharge line dismantled to replace the neutralising agent and restore neutralisation capacity, as would be the case with known simple units. The sock may have means attached to facilitate its removal and replacement, e.g. a tag. The shape of the base of the second chamber is preferably substantially semi-spherical. Preferably the neutralizing agent is held so that it does not restrict the condensate flow from the first to the second chamber. In a preferred embodiment the interior of the second chamber is adapted to maintain condensate through-flow even when the neutralising agent is in place e.g. by provision of at least one protrusion (e.g. a fin or rib) at or near the bottom of the second chamber. In use, the fin(s), rib(s) or other protrusion(s) would prevent the neutralising agent from settling into the bottom of the second chamber and inhibiting condensate flow from the first to second chamber. Alternatively or additionally, this may be achieved by enclosing the neutralising agent in a sealed permeable container (see above) which is shaped so that it does not fit snugly into the base of the second chamber. For example the neutralising agent could be contained in a pliable bag which has a seam at its base sufficiently stiff to maintain the base dimension and thus prevent the bag from slipping into the bottom of the second chamber.

The first and second chambers preferably approximate to the two limbs of a 'U' configuration, with the inlet at or near the top of the first chamber, the outlet at or near the top of the second chamber and both laterally offset from the centre. Preferably, for optimal performance, the outlet is positioned lower than the inlet, more preferably by approximately one pipe diameter. At or near the bottom of the first chamber is preferably an access means to permit debris to be removed easily from the chamber. For example the access means could be a removable cap, which could optionally include a transparent section to allow inspection of the unit. At or near the top of the second chamber is provided an access means to permit easy replacement of the solid neutralising agent. For example the access means could be a removable cap which could optionally include a transparent section to allow spot checks of the unit.

Preferably the unit is rigid, e.g. of plastic, and fitted with a quick release means so that when the unit is ready to be changed, this procedure can be done quickly and easily. An example of a quick release connection means suitable for connecting a neutralising unit of the present invention to a pipe may be a simple standard 'push fitting' or alternatively comprise an external screw thread, provided at the inlet side of the unit and a complementary internal screw thread provided on a collar removably attached to the pipe in line with the inlet, arranged such that the collar can be screwed onto the unit when fitting the unit and unscrewed for removal of the unit. Usually there would be a similar quick release connection means provided at the outlet of the unit.

An embodiment of the present invention will now be described with reference to the accompanying drawings in which;

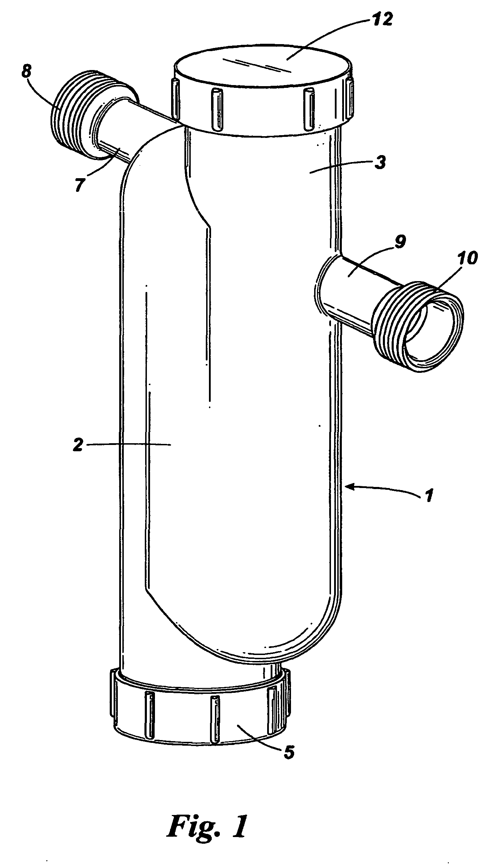

Figure 1 is a perspective side front view of a unit according to one embodiment of the present invention.

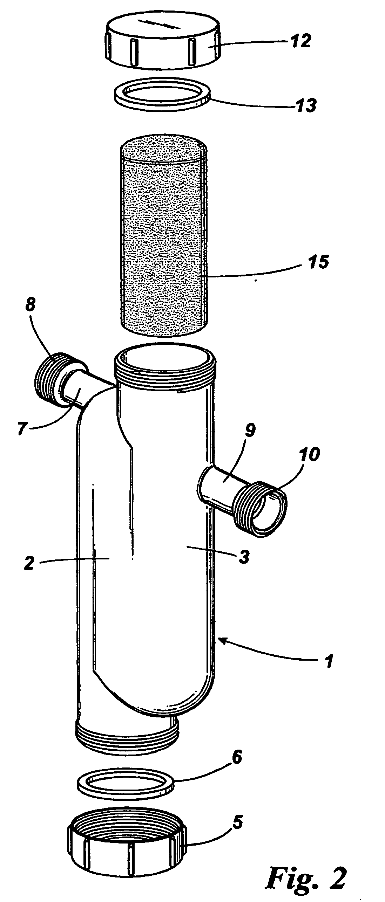

Figure 2 is a schematic 'exploded' view of the unit shown in Figure 1.

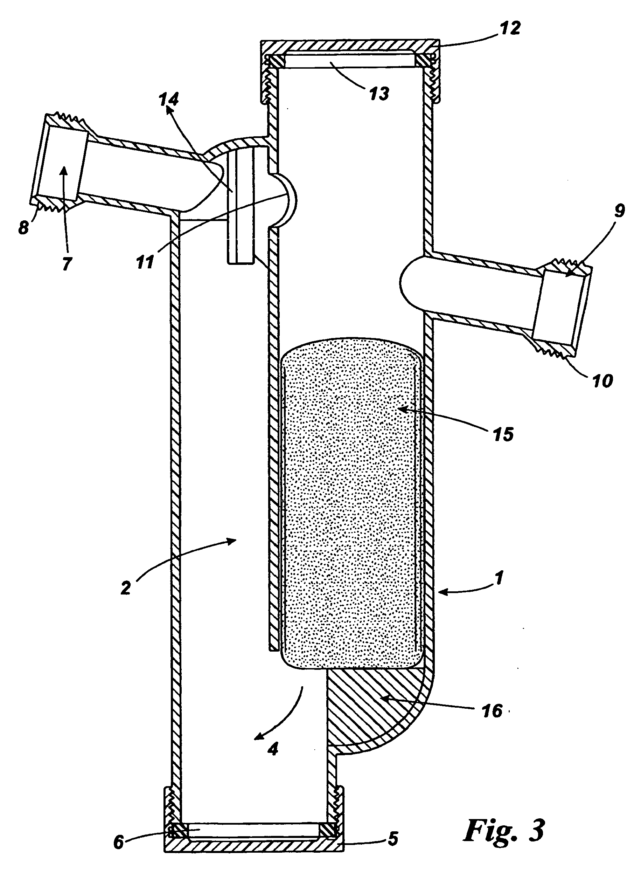

Figure 3 is a section view of the unit shown in Figures 1 and 2, but from a direct front view.

Referring to the Figures, the unit comprises a housing 1 having a first chamber 2 in communication with a second chamber 3 by means of a gap 4. The bottom of the first chamber 2 is closed by means of an easily removable screw cap 5 sealed into position by means of a seal 6. The cap 5 may be conveniently provided with a transparent section to allow spot checks of the unit. Extending from the top of the first chamber 2 is an inlet pipe 7 provided with an external screw thread 8. A baffle 14 is provided at the top of the first chamber 2.

Extending from the top of the second chamber 3 is an outlet pipe 9 provided with an external screw thread or push fitting 10. Between the top of the first chamber 2 and the second chamber 3 is a hole 11. The top of the second chamber 3 is externally screw threaded and closed by means of an easily removable screw threaded cap 12 sealed into position by means of a seal 13. The cap 12 may be optionally provided with a transparent section to allow spot checks of the unit. Solid particulate neutralising agent is held in a pliable sealed mesh bag 15 positioned below the level of the outlet pipe 9 and hole 11. The mesh bag 15 is supported by a protruding support fin 16 located in the hemispherical base of the chamber so that it will not settle or fit snugly into the base of the second chamber, thus keeping gap 4 free.

In normal use, the unit is connected to the boiler condensate outlet through the inlet pipe 7. Aliquots of condensate are expelled from the boiler (not shown) through the inlet pipe 7 into the first chamber 2. Baffle 14 prevents condensate from passing straight into the second chamber 3. The condensate collects at the bottom of the first chamber 2 until the next aliquot or batch of condensate enters the inlet pipe 7and pushes the condensate already collected at the bottom of first chamber 2 through the gap 4 and into the second chamber 3. As each aliquot enters the first chamber 2 the condensate in the second chamber 3 is in turn forced through the solid neutralising agent in the sock 15 and is neutralised as it passes. The neutralised condensate exits the second chamber 3 through the outlet pipe 9 to a drain (not shown). The design of the unit means that there is an air passage namely outlet 9, through the top region of second chamber 3 above the neutralising agent 15, through hole 11, around baffle 14 and out through inlet 7. This allows substantially continuous air flow through the unit without the air having to pass through the 'U' configuration of the first and second chambers 2,3 and through the neutralizing agent 15. The aim of this feature is to allow air to flow upstream (i.e. towards the boiler) so as not to interfere with the siphoning action of the condensate discharge, even if there is a blockage in the unit.

In the event of blockage of the unit caused by any restriction to flow in either first chamber 2 or second chamber 3, the geometry of the unit is so designed that condensate backs up in first chamber 2 until it encounters an escape passage - hole 11 - at the top of the separating wall between first chamber 2 and second chamber 3 and can enter and then discharge as normal through outlet 9 from the top of second chamber 3 - but without having passed through the 'U' path of the unit and not through the neutralising agent 15. Although the discharge from the unit would then be un-neutralised acidic condensate, there is no danger of interfering with the operation of the boiler, nor of condensate backing up to the boiler unit itself.

When it is necessary to replace the neutralizing agent this is simply done by unscrewing the cap 12, pulling out the bag 15 by means of a tag (not shown), inserting a replacement bag 15 containing fresh neutralising agent, and screwing the cap 12 back on. There is no need to disconnect the unit 1 from its connecting pipe work so the process is quick, clean and easy.

## Claims

1. A neutralising unit suitable for attachment to the condensate outlet of a condensing boiler comprises a housing which has an inlet leading into a first chamber, a second chamber leading to an outlet, the second chamber containing a solid neutralising agent in particulate form, in which the neutralising unit is adapted so that, in normal use, condensate from the boiler flows through the inlet (7) into the first chamber (2), then upwards through the solid neutralising agent (15) in the second chamber (3) and then out through the outlet (9) wherein the unit is provided with an air passage which extends completely through the unit from the inlet (7) to the outlet (9) without passing through the neutralising agent so that in normal use of the unit, air can pass from the outlet (9) to the inlet (7) without passing through the neutralising agent, the first chamber (2) is provided with a barrier means (14) to direct condensate into the first chamber (2), **characterised in that** the neutralising agent is enclosed in a sealed container (15) which is permeable to the condensate but confines the neutralising agent, and access means (12) is provided at or near the top of the second chamber to allow removal/replacement of the neutralising agent.

2. A neutralising unit according to claim 1 **characterised in that** the unit is provided with an escape passage at or near the top of the separating wall between first and second chambers so that in the event of blockage of the unit caused by any restriction to condensate flow in either first or second chamber, the condensate would pass through the escape passage and then discharge from the outlet of the second chamber without having passed through the neutralising agent.

3. A neutralising unit according to claim 2 **characterised in that** the air passage also functions as the escape passage.

4. A neutralising unit according to any preceding claim **characterised in that** the barrier means comprises a baffle (14).

5. A neutralising unit according to any preceding claim **characterised in that** the neutralising agent is enclosed in a pliable container.

6. A neutralising unit according to any preceding claim **characterised in that** the neutralising agent is held so that it does not restrict the flow of condensate from the first chamber into the second chamber.

7. A neutralising unit according to claim 6 **characterised in that** the interior of the second chamber is provided with at least one protrusion to prevent the neutralising agent from settling into the bottom of the second chamber.

8. A neutralising unit according to claim 7 **characterised in that** the protrusion comprises at least one fin (16).

9. A neutralising unit according to any preceding claim **characterised in that** the first and second chambers approximate to the two limbs of a 'U' configuration.

10. A neutralising unit according to any preceding claim **characterised in that** the outlet is positioned lower than the inlet.

## Patentansprüche

1. Neutralisierungseinheit, geeignet für den Anschluss am Kondensatablauf einer Brennwerttherme, beinhaltend ein Gehäuse, das einen Einlauf in eine erste Kammer aufweist, eine zweite Kammer, die zu einem Auslauf führt, wobei die zweite Kammer ein festes Neutralisierungsmittel in Partikelform enthält, wobei die Neutralisierungseinheit angepasst ist, so dass, bei normaler Verwendung, Kondensat aus der Therme durch den Einlauf (7) in die erste Kammer (2), dann aufwärts durch das feste Neutralisierungsmittel (15) in die zweite Kammer (3) und dann durch den Ablauf (9) heraus strömt, wobei die Einheit mit einem Luftgang versehen ist, der sich vollständig durch die Einheit vom Einlauf (7) bis zum Auslauf (9) erstreckt, ohne durch das Neutralisierungsmittel zu gehen, so dass bei normaler Verwendung der Einheit Luft vom Auslauf (9) zum Einlauf (7) gehen kann, ohne durch das Neutralisierungsmittel zu gehen, wobei die erste Kammer (2) mit einem Barrieremittel (14) versehen ist, um Kondensat in die erste Kammer (2) zu leiten, **dadurch gekennzeichnet, dass** das Neutralisierungsmittel in einem abgedichteten Behälter (15) eingeschlossen ist, der für das Kondensat durchlässig ist, aber das Neutralisierungsmittel einsperrt, und ein Zugangsmittel (12) an oder nahe der Oberseite der zweiten Kammer vorgesehen ist, um Entfernen/Auswechseln des Neutralisierungsmittels zu erlauben.

2. Neutralisierungseinheit gemäß Anspruch 1, **dadurch gekennzeichnet, dass** die Einheit mit einem Ausströmgang an oder nahe der Oberseite der Trennwand zwischen der ersten und der zweiten Kammer versehen ist, so dass im Fall der Blockierung der Einheit, verursacht durch eine Einschränkung des Kondensatstroms in entweder der ersten oder der zweiten Kammer, das Kondensat durch den Ausströmgang gehen und dann vom Auslauf der zweiten Kammer ausfließen würde, ohne durch das Neutralisierungsmittel gegangen zu sein.

3. Neutralisierungseinheit gemäß Anspruch 2, **dadurch gekennzeichnet, dass** der Luftgang auch als Ausströmgang fungiert.

4. Neutralisierungseinheit gemäß einem vorhergehenden Anspruch, **dadurch gekennzeichnet, dass** das Barrieremittel ein Prallblech (14) beinhaltet.

5. Neutralisierungseinheit gemäß einem vorhergehenden Anspruch, **dadurch gekennzeichnet, dass** das Neutralisierungsmittel in einem flexiblen Behälter eingeschlossen ist.

6. Neutralisierungseinheit gemäß einem vorhergehenden Anspruch, **dadurch gekennzeichnet, dass** das Neutralisierungsmittel so gehalten wird, dass es den Strom des Kondensats von der ersten Kammer in die zweite Kammer nicht einschränkt.

7. Neutralisierungseinheit gemäß Anspruch 6, **dadurch gekennzeichnet, dass** die Innenseite der zweiten Kammer mit mindestens einem Vorsprung versehen ist, um zu verhindern, dass sich das Neutralisierungsmittel auf den Boden der zweiten Kammer absetzt.

8. Neutralisierungseinheit gemäß Anspruch 7, **dadurch gekennzeichnet, dass** der Vorsprung mindestens eine Rippe (16) beinhaltet.

9. Neutralisierungseinheit gemäß einem vorhergehenden Anspruch, **dadurch gekennzeichnet, dass** die erste und die zweite Kammer sich den zwei Gliedern einer "U"-Konfiguration annähern.

10. Neutralisierungseinheit gemäß einem vorhergehenden Anspruch, **dadurch gekennzeichnet, dass** der Auslauf niedriger als der Einlauf positioniert ist.

## Revendications

1. Unité de neutralisation adaptée pour être fixée à l'évacuation de condensation d'une chaudière à condensation comprenant un carter qui possède une admission conduite dans une première chambre, une seconde chambre conduisant à une évacuation, la seconde chambre contenant un agent de neutralisation solide sous forme particulaire, dans laquelle l'unité de neutralisation est adaptée pour que, en utilisation normale, la condensation issue de la chaudière s'écoule à travers l'admission (7) dans la première chambre (2), puis vers le haut à travers l'agent de neutralisation solide (15) dans la seconde chambre (3) puis vers l'extérieur à travers l'évacuation (9) dans laquelle l'unité est munie d'une conduite d'air qui traverse d'un bout l'autre l'unité depuis l'admission (7) jusqu'à l'évacuation (9) sans traverser l'agent de neutralisation pour que, en utilisation normale de l'unité, l'air puisse passer depuis l'évacuation (9) jusqu'à l'admission (7) sans traverser l'agent de neutralisation, la première chambre (2) est munie d'un moyen de barrière (14) pour diriger la condensation dans la première chambre (2), **caractérisée en ce que** l'agent de neutralisation est enfermé dans un contenant étanche (15) qui est perméable à la condensation mais confine l'agent de neutralisation, et un moyen d'accès (12) est prévu au niveau de ou à proximité du haut de la seconde chambre pour permettre le retrait/remplacement de l'agent de neutralisation.

2. Unité de neutralisation selon la revendication 1 **caractérisée en ce que** l'unité est munie d'une conduite d'échappement au niveau de ou à proximité du haut de la paroi de séparation entre la première et la seconde chambres de façon à ce qu'en cas de blocage de l'unité provoqué par une quelconque restriction pour condenser le flux dans soit la première soit la seconde chambre, la condensation passe à travers la conduite d'échappement puis s'évacue depuis l'évacuation de la seconde chambre sans avoir à traverser l'agent de neutralisation.

3. Unité de neutralisation selon la revendication 2 **caractérisée en ce que** la conduite d'air sert également de conduite d'échappement.

4. Unité de neutralisation selon l'une quelconque des revendications précédentes **caractérisée en ce que** le moyen de barrière comprend un déflecteur (14).

5. Unité de neutralisation selon l'une quelconque des revendications précédentes **caractérisée en ce que** l'agent de neutralisation est enfermé dans un contenant pliable.

6. Unité de neutralisation selon l'une quelconque des revendications précédentes **caractérisée en ce que** l'agent de neutralisation est maintenu de façon à ce qu"il ne restreigne pas le flux de condensation en provenance de la première chambre dans la seconde chambre.

7. Unité de neutralisation selon la revendication 6 **caractérisée en ce que** l'intérieur de la seconde chambre est muni d'au moins une protubérance pour empêcher l'agent de neutralisation de se déposer au fond de la seconde chambre.

8. Unité de neutralisation selon la revendication 7 **caractérisée en ce que** la protubérance comprend au moins une ailette (16).

9. Unité de neutralisation selon l'une quelconque des revendications précédentes **caractérisée en ce que** les première et seconde chambres ressemblent aux deux bras d'une configuration en 'U'.

10. Unité de neutralisation selon l'une quelconque des revendications précédentes **caractérisée en ce que** l'évacuation est positionnée plus bas que l'admission.
